# EUROPÄISCHE PATENTANMELDUNG

(11) **EP 3 861 853 A1**
(43) Veröffentlichungstag der Anmeldung: **11.08.2021**
(21) Anmeldenummer: 21153011.8
(22) Anmeldetag: 22.01.2021
(51) Int. Cl.: A01K 5/01, A01K 5/00

(54) **SYSTEM UND VERFAHREN ZUR OPTIMIERUNG DER MENGE VON IN EINEM FUTTERMISCHWAGEN ZU MISCHENDEM UND AUS DEM FUTTERMISCHWAGEN AUSZUBRINGENDEM FUTTER**

(30) Priorität: 10.02.2020 DE 102020103289
(71) Anmelder: Mayer Verwaltungs GmbH & Co. KG, 84529 Tittmoning (DE)
(72) Erfinder: Twickler, Philipp, 83646 Wackersberg (DE); Felber, Johann, 83410 Laufen (DE)
(74) Vertreter: Flach Bauer Stahl Patentanwälte Partnerschaft mbB

(57) **Zusammenfassung**

Ein System zur Optimierung der Menge von in einem Futtermischwagen zu mischendem und/oder aus einem Futtermischwagen auszubringendem Futter ist dadurch gekennzeichnet, dass das System eine Wetterdatenerfassungseinrichtung zur Erfassung von Wetterdaten in der Form von Luftfeuchtigkeit, Niederschlag, Luftgeschwindigkeit und/oder Temperatur umfasst, wobei der Wiegecomputer oder ein anderer, das Gewicht des einzufüllenden und/oder auszubringenden Futters berechnender Computer mit der Wetterdatenerfassungseinrichtung in Kommunikationsverbindung ist, um das Gewicht des einzufüllenden und/oder auszubringenden Futters in Abhängigkeit der Wetterdaten zu berechnen.

## Beschreibung

Die Erfindung betrifft ein System und ein Verfahren zur Optimierung der Menge von in einem Futtermischwagen zu mischendem und aus dem Futtermischwagen auszubringendem Futter gemäß dem Oberbegriff der Ansprüche 1, 2, 6 und 7.

In der Landwirtschaft werden bekannterweise Futtermischwagen eingesetzt, in die Futter in der Form von Grassilage, Maissilage, Kraftfutter etc. eingefüllt und gemischt wird, um dann vom Beladeort zum Fütterungsort gefahren und dort ausgegeben zu werden.

Die in dem Futtermischwagen einzufüllende und zu mischende Futtermenge hängt vom Futterbedarf der Tiere ab. Hierzu wird ein Beladerezept bzw. Beladeprogramm erstellt, das die Soll-Gewichtsdaten der einzelnen Futterkomponenten für eine Mischration enthält. Beim Befüllen des Futtermischwagens wird dann das eingefüllte Futter mit Hilfe eines am Futtermischwagen angeordneten Wiegecomputers gewogen, wobei der Wiegecomputer die Ist-Gewichtsdaten mit den Soll-Gewichtsdaten vergleicht. Über eine Anzeige wird der Landwirt laufend über das momentane Füllgewicht bzw. die noch zu befüllende Differenz zum Soll-Gewicht informiert. Die Anzeige kann dabei entweder direkt am Futtermischwagen oder, falls ein separates Beladefahrzeug verwendet wird, auch am Beladefahrzeug angeordnet sein, wobei im letzteren Fall die Gewichtsdaten vom Wiegecomputer per Funk zur Anzeige übertragen werden.

Die optimale Futtermenge und Futteraufnahme der Tiere ist von der Trockenmasse der jeweiligen Futterkomponenten abhängig. Unter Trockenmasse wird die Gesamtmasse des Futters abzüglich der Masse des darin enthaltenen Wassers verstanden. Die Feuchtigkeit des Futters und damit sein Wassergehalt können jedoch je nach Wetterbedingungen erheblich schwanken. So kann der Wassergehalt eines Futtermittels, beispielsweise Gras- oder Maissilage, das sich in einem Fahrsilo befindet und der Witterung ausgesetzt ist, bei hoher Luftfeuchtigkeit, niedriger Luftgeschwindigkeit und hoher Temperatur stark ansteigen. Dies bedeutet, dass die Trockenmasse des Futters relativ zu dessen Gesamtmasse je nach Wetterbedingungen stark variieren kann. Hieraus ergibt sich, dass die vom Wiegecomputer des Futtermischwagens gewogene Gesamtmasse häufig nicht dem optimalen Bedarf der Tiere an Trockenmasse entspricht.

Weiterhin ist auch die Futteraufnahme der Tiere stark abhängig von der Umgebungstemperatur, Luftfeuchtigkeit und Windgeschwindigkeiten. Beispielsweise suchen Rinder bei Temperaturen über 20° den Schatten auf und reduzieren die Futteraufnahme.

Der Erfindung liegt daher die Aufgabe zugrunde, ein System und ein Verfahren der eingangs genannten Art zu schaffen, mit dem die Menge von in einem Futtermischwagen zu mischendem und/oder aus dem Futtermischwagen auszubringendem Futter besser an den tatsächlichen Futterbedarf der Tiere angepasst werden kann.

Diese Aufgabe wird erfindungsgemäß durch ein System mit den Merkmalen der Ansprüche 1 und 2 und ein Verfahren mit den Merkmalen der Ansprüche 6 und 7 gelöst. Vorteilhafte Ausführungsformen der Erfindung sind in den weiteren Ansprüchen beschrieben.

Das erfindungsgemäße System gemäß Anspruch 1 ist dadurch gekennzeichnet, dass das System eine Wetterdatenerfassungseinrichtung zur Erfassung von Wetterdaten in der Form von Luftfeuchtigkeit, Niederschlag, Luftgeschwindigkeit und/oder Temperatur umfasst, wobei der Wiegecomputer oder ein anderer, das Gewicht des einzufüllenden Futters berechnender Computer mit der Wetterdatenerfassungseinrichtung in Kommunikationsverbindung ist, um das Gewicht des einzufüllenden Futters in Abhängigkeit der Wetterdaten zu berechnen.

Mit Hilfe des erfindungsgemäßen Systems kann die Menge beziehungsweise das Gewicht der im Futtermischwagen zu mischenden Futterkomponenten besser an den tatsächlichen Bedarf der Tiere angepasst werden. Dies erfolgt dadurch, dass die Soll-Gewichtsdaten der einzelnen Futterkomponenten mittels der Wetterdaten und eines geeigneten Logarithmus derart modifiziert werden, dass die Trockenmasse der Futterkomponenten bei jedem Wetter dem tatsächlichen Trockenmassebedarf der Tiere entspricht. Steigt beispielsweise der Feuchtigkeitsgehalt einer Futterkomponente, die in einem Fahrsilo gelagert ist, aufgrund hoher Luftfeuchtigkeit, aufgrund von Niederschlag, der in das Futter gelangt oder aufgrund einer feucht geernteten Futtercharge an, dann wird mittels des erfindungsgemäßen Systems die Gewichtsvorgabe für das zu mischende Futter oder für eine einzelne Futterkomponente mittels des Logarithmus in geeigneter Weise derart erhöht, dass die Trockenmasse des zu mischenden Futters wieder dem optimalen Wert entspricht. Der Berichtigungslogarithmus kann dabei einen oder mehrere der folgenden Parameter berücksichtigen: Luftfeuchtigkeit, Niederschlag, Luftgeschwindigkeit, Temperatur. Umgekehrt wird bei einer sehr niedrigen Luftfeuchtigkeit und einem unterdurchschnittlichen Wassergehalt des Futters das Sollgewicht der in den Futtermischwagen einzufüllenden Futterkomponenten derart reduziert, dass das Trockengewicht der Futterkomponenten wieder dem optimalen Bedarf der Tiere entspricht.

Für die Erfindung ist es somit charakteristisch, dass die Feuchte bzw. der Wassergehalt des zu mischenden Futters indirekt über die Wetterparameter der die Futterlagerstätte umgebenden Atmosphäre bestimmt wird und die Soll-Gewichtsdaten der zu mischenden Futterkomponenten computergestützt mittels eines entsprechenden Logarithmus unter Berücksichtigung einer errechneten Feuchte bzw. Wassergehalts angepasst werden.

Die angepassten Soll-Gewichtsdaten können automatisch vom Wiegecomputer übernommen und dem Landwirt auf einer entsprechenden Anzeigeeinheit, insbesondere Monitor oder Display, angezeigt werden. Alternativ ist es auch möglich, dass die angepassten Soll-Gewichtsdaten dem Landwirt zunächst nur als Empfehlung angezeigt und nur nach Bestätigung durch den Landwirt übernommen werden.

Weiterhin kann das erfindungsgemäße System derart ausgebildet sein, dass anhand der Wetterdaten Prognosen für die benötigte Fütterungsmenge in der Zukunft erstellt werden.

Das erfindungsgemäße System kann ferner derart ausgebildet sein, dass mit Hilfe der Wetterdaten die Häufigkeit und Uhrzeit der Fütterung automatisch oder als Empfehlung angezeigt wird. Die Empfehlung kann beispielsweise lauten, bei Hitze eine zweimalige Fütterung vorzunehmen.

Das erfindungsgemäße System gemäß Anspruch 2 dient zur Optimierung der Menge von aus einem Futtermischwagen auszubringendem Futter und ist dadurch gekennzeichnet, dass das System eine Wetterdatenerfassungseinrichtung zur Erfassung von Wetterdaten in der Form von Luftfeuchtigkeit, Niederschlag, Luftgeschwindigkeit und/oder Temperatur umfasst, wobei der Wiegecomputer oder ein anderer, das Gewicht des auszubringenden Futters berechnender Computer mit der Wetterdatenerfassungseinrichtung in Kommunikationsverbindung ist, um das Gewicht des auszubringenden Futters in Abhängigkeit der Wetterdaten zu berechnen.

Dieses System bietet die gleichen Vorteile wie das System gemäß Anspruch 1 und kann dem Landwirt beim Ausbringen des Futters dasjenige auszubringende Gewicht anzeigen, das für die Tiere unter Berücksichtigung des vorherrschenden Wetters und der zu fütternden Futter-Trockenmasse optimal ist.

Der Logarithmus zur Anpassung der zu mischenden und/auszubringenden Futtermenge an die Wetterbedingungen kann alternativ oder zusätzlich zu den Wetterbedingungen am Ort der Futterlagerstätte auch die Wetter- bzw. Umgebungsbedingungen an der Fütterungsstätte, insbesondere im Stall, berücksichtigen, um den in der Abhängigkeit dieser Wetter- bzw. Umgebungsbedingungen variablen Appetit der Tiere zu berücksichtigen.

Die einzelnen Wetterdaten werden vorzugsweise über einen längeren Zeitraum gespeichert und ausgewertet, um die Zeitdauer der jeweiligen Wetterbedingungen bei der Korrektur der Fütterungsmenge berücksichtigen zu können.

Die Anpassung der Fütterungsmenge kann entweder dem Landwirt auf einer geeigneten Anzeigeeinrichtung vorgeschlagen oder direkt im Wiegecomputer oder einem anderen, zur Berechnung der Fütterungsmenge dienenden Computer durchgeführt werden.

Wird das Be- und/oder Entladeprogramm nicht direkt in den Wiegecomputer eingegeben, sondern an einem anderen, vom Wiegecomputer getrennten Computer erstellt, so kann das Be- und/oder Entladeprogramm vorzugsweise mittels Funk oder eines Speichergeräts, beispielsweise eines USB-Sticks, auf den Wiegecomputer übertragen werden.

Gemäß einer vorteilhaften Ausführungsform der Erfindung umfasst die Wetterdatenerfassungseinrichtung eine Wettermessstation, die in Nachbarschaft eines Futtersilos, beispielsweise Fahrsilos, angeordnet ist. Hierdurch ist es möglich, das Be- und /oder Entladeprogramm gezielt an diejenigen atmosphärischen Bedingungen anzupassen, die im Bereich des Futtersilos herrschen.

Alternativ oder zusätzlich ist es auch möglich, dass die Wetterdatenerfassungseinrichtung eine Wettermessstation umfasst, die in oder in Nachbarschaft eines Stalls angeordnet ist. Hierdurch können diejenigen atmosphärischen Bedingungen stärker berücksichtigt werden, denen die Tiere ausgesetzt sind und die den Appetit der Tiere beeinflussen.

Die Kommunikationsverbindung zwischen der Wettermessstation und dem Wiegecomputer oder dem anderen Computer erfolgt zweckmäßigerweise über eine geeignete Funkverbindung, mit der die Wetterdaten übertragen werden können. Wird zur Erstellung des Be- und/oder Entladeprogramms ein stationärer Computer verwendet, ist auch eine leistungsgebundene Datenübertragung möglich.

Gemäß einer vorteilhaften Ausführungsform umfasst die Wetterdatenerfassungseinrichtung eine Datenempfangseinrichtung zum Empfang der Wetterdaten von einer öffentlichen Wetterstation. Auf diese Weise ist es möglich, die Wetterdaten nicht oder nicht nur von einer Wettermessstation, die auf dem Hof des Landwirts, beispielsweise in Nachbarschaft der Futterlagerstätte oder der Fütterungsstätte, positioniert ist, zu empfangen, sondern auch von einer öffentlichen Wetterstation, insbesondere über das Internet oder eine Satelliten- oder Funkverbindung.

Das erfindungsgemäße Verfahren gemäß Anspruch 6 ist dadurch gekennzeichnet, dass das Gewicht des in den Futtermischwagen einzufüllenden Futters mit Berücksichtigung von Wetterdaten in der Form von Luftfeuchtigkeit, Niederschlag, Luftgeschwindigkeit und/oder Temperatur berechnet wird.

Das erfindungsgemäße Verfahren gemäß Anspruch 7 ist dadurch gekennzeichnet, dass das Gewicht des aus dem Futtermischwagen auszubringenden Futters mit Berücksichtigung von Wetterdaten in der Form von Luftfeuchtigkeit, Niederschlag, Luftgeschwindigkeit und/oder Temperatur berechnet wird.

Mit Hilfe des erfindungsgemäßen Verfahrens werden die gleichen Vorteile erzielt, wie vorstehend im Zusammenhang mit dem erfindungsgemäßen System beschrieben, so dass hierauf verwiesen wird. Maßgebend ist, dass Wetterdaten, die entweder von einer beispielsweise auf dem Hof des Landwirts angeordneten Wettermessstation oder von einer öffentlichen Wetterstation zur Verfügung gestellt werden, verwendet werden, um die Menge bzw. das Gewicht des im Futtermischwagen zu mischenden oder aus dem Futtermischwagen auszubringenden Futters an die Wetterbedingungen bzw. atmosphärischen Bedingungen derart anzupassen, dass die Trockenmasse des Futters dem Bedarf der Tiere entspricht.

## Patentansprüche

1. System zur Optimierung der Menge von in einem Futtermischwagen zu mischendem Futter, mit einem am Futtermischwagen angeordneten Wiegecomputer zum Wiegen des in den Futtermischwagen eingefüllten Futters und zum Verarbeiten eines Beladeprogramms, mit dessen Hilfe das Gewicht des in den Futtermischwagen einzufüllenden Futters berechnet wird, **dadurch gekennzeichnet, dass** das System eine Wetterdatenerfassungseinrichtung zur Erfassung von Wetterdaten in der Form von Luftfeuchtigkeit, Niederschlag, Luftgeschwindigkeit und/oder Temperatur umfasst, wobei der Wiegecomputer oder ein anderer, das Gewicht des einzufüllenden Futters berechnender Computer mit der Wetterdatenerfassungseinrichtung in Kommunikationsverbindung ist, um das Gewicht des einzufüllenden Futters in Abhängigkeit der Wetterdaten zu berechnen.

2. System zur Optimierung der Menge von aus einem Futtermischwagen auszubringendem Futter, mit einem am Futtermischwagen angeordneten Wiegecomputer zum Wiegen des in den Futtermischwagen eingefüllten Futters und zum Verarbeiten eines Entladeprogramms, mit dessen Hilfe das Gewicht des aus dem Futtermischwagen auszubringenden Futters berechnet wird, **dadurch gekennzeichnet, dass** das System eine Wetterdatenerfassungseinrichtung zur Erfassung von Wetterdaten in der Form von Luftfeuchtigkeit, Niederschlag, Luftgeschwindigkeit und/oder Temperatur umfasst, wobei der Wiegecomputer oder ein anderer, das Gewicht des auszubringenden Futters berechnender Computer mit der Wetterdatenerfassungseinrichtung in Kommunikationsverbindung ist, um das Gewicht des auszubringenden Futters in Abhängigkeit der Wetterdaten zu berechnen.

3. System nach Anspruch 1 oder 2, **dadurch gekennzeichnet, dass** die Wetterdatenerfassungseinrichtung eine Wettermessstation umfasst, die in Nachbarschaft eines Futtersilos angeordnet ist.

4. System nach einem der vorhergehenden Ansprüche, **dadurch gekennzeichnet, dass** die Wetterdatenerfassungseinrichtung eine Wettermessstation umfasst, die in oder in Nachbarschaft eines Stalls angeordnet ist.

5. System nach einem der vorhergehenden Ansprüche, **dadurch gekennzeichnet, dass** die Wetterdatenerfassungseinrichtung eine Datenempfangseinrichtung zum Empfang der Wetterdaten von einer öffentlichen Wetterstation umfasst.

6. Verfahren zur Optimierung der Menge von in einem Futtermischwagen zu mischendem Futter, wobei mittels eines am Futtermischwagen angeordneten Wiegecomputers ein Beladeprogramm verarbeitet wird, welches das Gewicht des in den Futtermischwagen einzufüllenden Futters berechnet, **dadurch gekennzeichnet, dass** das Gewicht des in den Futtermischwagen einzufüllenden Futters mit Berücksichtigung von Wetterdaten in der Form von Luftfeuchtigkeit, Niederschlag, Luftgeschwindigkeit und/oder Temperatur berechnet wird.

7. Verfahren zur Optimierung der Menge von aus einem Futtermischwagen auszubringendem Futter, wobei mittels eines am Futtermischwagen angeordneten Wiegecomputers ein Entladeprogramm verarbeitet wird, welches das Gewicht des aus dem Futtermischwagen auszubringenden Futters berechnet, **dadurch gekennzeichnet, dass** das Gewicht des aus dem Futtermischwagen auszubringenden Futters mit Berücksichtigung von Wetterdaten in der Form von Luftfeuchtigkeit, Niederschlag, Luftgeschwindigkeit und/oder Temperatur berechnet wird.
